# EUROPEAN PATENT APPLICATION

(11) **EP 3 929 340 A1**
(43) Date of publication of application: **29.12.2021**
(21) Application number: 20182613.8
(22) Date of filing: 26.06.2020
(51) Int. Cl.: D04H 3/16, A41D 13/11, A62B 23/02, B01D 39/16, D06M 10/02

(54) **ELECTROSTATICALLY CHARGED FILTER MATERIAL, ITS MANUFACTURE AND USE**

(71) Applicant: LENZING AKTIENGESELLSCHAFT, 4860 Lenzing (AT)
(72) Inventor: Dorner, Andreas, 5020 Salzburg (AT); Wojtaszak, Jakub, 50-001 Wroclaw (PL)

(57) **Abstract**

This invention relates to a method for the manufacture of an electrostatically charged nonwoven material, wherein the nonwoven material is a meltblown material and in the electrocharging zone a voltage of between 10 and 50kV is applied by each charging device. Furthermore it relates to a material manufactured according to this method and the use of this material.

## Description

This invention relates to a method for the manufacture of an electrostatically charged nonwoven material, wherein the nonwoven material is a meltblown material and in the electrocharging zone a voltage of between 10 and 50kV is applied by each charging device. Furthermore it relates to a material manufactured according to this method and the use of this material.

Face masks shall protect the wearer from harmful air pollution particles. They are typically designed to be worn over the nose and the mouth. There are two basic designs - a molded cup-shaped form (see e.g. WO 00/048481 A1) or a flat-folded form (see e.g. EP 0391725 A1).

### Prior Art

"Electretized material" or "electret charge" means an electric charge which is located not only on the surface of a material but also permanently inside the material.

US 4,789,504 discloses an electretized material for use in making a dust-removing filter, the electretized material being made of an insulating polymer material incorporated with a fatty acid metal salt, which maintains high dust removing performances over a long period of time. According to US 4,789,504 the material is electretized by rubbing or corona charge treatment. The fibrous material is made from undrawn melt-spun filaments by subsequent drawing by means of a hot plate, spun bonding, followed by needle-punching. The incorporated fatty acid metal salt should ensure a permanent dielectric polarization of the electretized material.

EP 0391725 A1 discloses a surgical or protective masks production process based on specific laminated layers. First a layer of melt blown fibers is deposited on a first outer layer. This laminate is then charged by a corona charging. The second layer of melt blown fibers is then deposited on a second outer layer. Both laminates are thereafter combined to give a four-ply laminate that is again charged by a corona charging.

WO 00/048481 A1 discloses respiratory devices having first and second lines of demarcation bisected by a fold. The devices are capable of being folded in a first substantially flat configuration for storage (e.g., in a pocket) and are capable of being unfolded in a second ready-to-wear configuration so that a portion of the device covering the nose and the mouth is off-the-face. Processes for making such devices include folding a preform over a bisecting axis and cutting the preform at desired angles and sealing the cuts together to form the mask. The masks are formed of sandwich material, consisting of e.g. an outer cover web, a stiffener layer and an inner cover web.

The corona treatment (coronisation) process for enhancing the filtration performance of meltblown polypropylene nonwoven material is described among others in RSC Advances, 2018, 8, 7932-7941. Therein the nonwoven samples are treated at a voltage of 100kV for 30s and the distance between the electrodes was 100mm.

Unfortunately the coronisation process may have negative effects on nonwoven materials such as a delamination effect, surface damages, e.g. holes, and fibers sticking/catching to metal elements, e.g. metal rolls, bars, plates etc.. Furthermore the final products may lose valuable structural properties, which has strong influence on filtration efficiency and bacteria/viruses catching effect. Another disadvantage of the coronisation is that it produces significant amounts of gaseous ozone that needs to be removed, e.g. by additional waste gas withdrawal devices. When inhaled, ozone can damage the lungs. Relatively low amounts can cause chest pain, coughing, shortness of breath and throat irritation. Physical exertion during exposure to ozone causes a greater amount of ozone to be inhaled, and increases the risk of harmful respiratory effects. Typically the coronisation process causes the incorporation of oxygen into the treated material, which gives an often wanted modification of that material, e.g. in order to enhance the dyeability of its surface. However the coronisation process also causes a depolymerisation of a treated polymer material. Such depolymerisation naturally creates monomers and other low-molecular by-products . But such low-molecular compounds, which are typically volatile, are not a wanted compound in a face mask that shall protect the wearer from harmful air pollution particles.

### Problem

In view of this prior art the problem to be solved consisted in finding a physical treatment method for nonwoven materials, e.g. for use in face masks, with improved ability to catch bacteria, viruses and other particulate materials without showing the negative effects mentioned above.

### Description

It is an object of the present invention to provide a method for the manufacture of an electrostatically charged nonwoven material, said method comprising: a) Providing a nonwoven material, b) Conveying the nonwoven material through an electrocharging zone, said electrocharging zone containing one or more charging devices, c) Charging the nonwoven material in the electrocharging zone, wherein the nonwoven material is a meltblown material and in the electrocharging zone a voltage of between 10 and 50kV is applied by each charging device. Preferably the voltage is between 15 and 35kV. Preferably the electrocharging zone contains between 1 and 4, more preferably between 1 and 2, charging devices. The resulting, electrostatically charged material is an electret material.

Surprisingly it was found that in comparison to a known corona treatment (coronisation) process the electrostatic charging process according to our invention has no influence on possible delamination effect and fibers sticking/catching to metal elements, e.g. metal rolls, bars, plates etc. and causes no holes in the surface if it is performed correctly. Furthermore the process according to the invention prevents the final product against loosing valuable structural properties, that has strong influence on filtration efficiency and bacteria/viruses catching effect. It is supposed that this is due to the significantly smaller electrical power applied: While in a coronisation process at least 1000W will be used on a width of the nonwoven material of about 260mm, in the process according to the invention only between 10W (10kV, 1.0mA) and 250W (50kV, 5mA) are applied.

In a preferred embodiment of the invention the charging devices are charging bars. Such charging bars are commercially available, for example from Eltex-Elektrostatik-Gesellschaft mbH, Weil am Rhein, Germany. A detailed description of the working principle of such bars is disclosed in EP 1772933 A1. If more than one charging device is used, the charging devices can be arranged on the same side or on opposite sides of the nonwoven material. Furthermore the charging zone contains one or more discharging plates, mounted on the other side of the nonwoven material opposite to the charging devices in movement direction. A discharging plate works as the grounded electrode. According to the process of the invention the nonwoven material shall be in contact with the discharging plates.

In using charging bars it is important that the active electrocharging width is not significantly different from the width of the nonwoven material to be charged. In particular the active electrocharging width should be the width of the nonwoven material +/-2cm. If the active electrocharging width is wider than the width of the nonwoven material, the process efficiency will be decreased. E.g. the effective voltage at the edges of the nonwoven material will be reduced, a lot of energy would be lost, etc.. To adapt the active electrocharging width to the width of the nonwoven material the remaining length of the charging bars may be covered by a plastic material like an insulating tape which is grounded for fast discharging.

It was found that the distance between the nonwoven material and the charging bar surface should be not more than 2.0cm. Preferably it should be between 0.5 and 2.0cm. For specific types of nonwoven materials or conditions an even bigger distance may be more appropriate. The distance should be big enough to prevent direct contact between the nonwoven material and the charging device. A direct contact of the nonwoven material with the charging device may damage the nonwoven material, up to causing surface damages, e.g. holes in the nonwoven material.

Preferably the method should be performed in a clean room with air-condition (e.g. 25°C, 50% relative air humidity) to ensure stable process conditions.

In a preferred embodiment of the invention the applied electric current at each charging device is between 1.0 and 5.0mA per 260mm effective length of the charging device (i.e. 4.0 and 20.0mA per 1m length of charging device), preferably between 1.5 and 4.0mA per 260mm effective length of the charging device (i.e. 6.0 and 16.0mA per 1m length of charging device). This electric current is the current flowing between the charging device (i.e. the charging electrode) and the discharging plate (i.e. the discharging electrode). It is usually indicated at the high-voltage generator supplying the charging device. Generally the occurring electric current depends on the voltage applied as well as on the effective length of the charging bar: For an effective length of the charging bar of 260mm width fabric we measured an electric current of not less than 1.80mA, i.e. not less than 6.92mA per 1m length, at 16.0kV and not less than 3.60mA, i.e. not less than 13.84mA per 1m length, at 30.0kV. The tolerance observed was about 5%. The electrical current to be applied further depends on the distance between the charging device and thickness, i.e. weight per unit area, of the nonwoven material to be treated.

The nonwoven material may consist of one or more layers. In a preferred embodiment of the invention the nonwoven material consists of one, two, three or four individual nonwoven layers. The nonwoven meltblown material is a synthetic polymer material, in particular consisting of one or more of the group containing polypropylene, polyethylene terephthalate, polylactic acid, other polyesters, co-polymers of polypropylene and polyethylene, in particular PP-co-PE. PP-co-PE is particularly used by some meltblown manufacturers to produce fabric from such a raw-material to achieve improved fineness of filaments during the spinning and stretching process. The weight per unit area of one nonwoven layer may be between 10 and 100gsm (gram per square meter), for example 25gsm. However the mere weight per unit are is not so crucial; the thickness of the material is more important. The thickness should not exceed 4mm, otherwise a higher voltage would be required to generate the electric current and the electred charge. This would generate more ozone gas and chemical modification of the product, as well as cause a higher energy consumption.

A nonwoven meltblown polypropylene material of 25gsm may be moved through the electrocharging zone at a speed of between 5.0 and 30.0m/min, preferably between 10.0 and 20.0m/min, e.g. 15.0m/min.

In a preferred embodiment of the invention the charged nonwoven material is afterwards laminated or combined in a sandwich-like structure with air permeable cover layers on one or both outer sides. Such air permeable cover layers may be nonwoven materials or even perforated films, etc. In case the air permeable cover layers are nonwoven materials, they may be conventional nonwoven materials, made of staple fibers, or spunbond or meltblown materials. They may be of natural origin, like cotton, wool or other natural fibers, of man-made fibers like viscose or lyocell, or of synthetic origin, like the charged layers.

A further embodiment of the invention consists in providing a nonwoven material, consisting of one or two individual layers, characterized in that the material was wound up on a roll and contains an electrostatic charge of between 4kV and 20kV (measured in unwinded state after winding and subsequently unwinding the non-woven fabric).

In a preferred embodiment of the invention the nonwoven material is a meltblown material. The meltblown material may or may not show a pattern on its surface, e.g. obtained by embossing and it may contain different porosity levels, depending on fiber diameters and area density of the web.

In a further preferred embodiment of the invention the meltblown material is a synthetic polymer material, in particular consisting of one or more of the group containing polypropylene, polyethylene terephthalate, polylactic acid, other polyesters, co-polymers of polypropylene and polyethylene, in particular PP-co-PE. PP-co-PE is particularly used by some meltblown manufacturers to produce fabric from such a raw-material to achieve fineness of filaments during the spinning and stretching process.

Vacuum packaging may be recommendable to keep as much of the electric charge as possible on the nonwoven material. Esp. for medical services. => maybe better to use additives.

Another possibility to prolong the time the material stays charged may be the modification of the polymer material with specific additives, like metal oxides, etc.

In a preferred embodiment of the invention the nonwoven material shows a weight per unit area of between 5 and 50gsm, in particular between 10 and 30gsm. Further important properties of a suitable nonwoven material are its air permeability as well as a certain uniformity of the material. Air permeability may be between 30 and 500l/m²s, preferably between 50 and 350l/m²s. However, the suitable air permeability of the material strongly depends on the desired filtration class that should be achieved based on specific standards. The uniformity of the material is in particular expressed by the variation of the thickness and/or weight per unit area in cross direction, i.e. rectangular to the machine direction.

Preferably the fiber diameters of the nonwoven material according to the invention are below 10µm, preferably between 2.5 and 7.0µm. Bigger diameters will reduce the efficiency of the filtration effect.

In a preferred embodiment of the invention the nonwoven material consisting of one or two individual layers is an intermediate product and contains an electrostatic charge of between 40 kV and 70kV. "Intermediate product" means the nonwoven material after leaving the electrocharging zone and before roll-winding.

A further aspect of the present invention consists in the use of a nonwoven material according to the invention for the manufacture of a filtering device, wherein the nonwoven material is a material according to the invention, this material is used as an intermediate layer in a sandwich construction and the outer layers of the sandwich construction are consisting of a different material.

Preferably the filtering device is a personal protection device, in particular a medical mask, a respiratory mask or a garment. The nonwoven material according to the invention is in particular suitable for a.) filtration efficiency improvement for EN 14683 (and their international equivalents) products category (e.g. surgical masks), b.) filtration efficiency improvement for EN 149 products category e.g. respiratory masks without valve) and c.) generally suitable for possible filtration efficiency improvement for specific products category according to EN 779 and EN 1822. Further possible uses of the nonwoven material according to the invention are in surgical gowns or other personal protection materials where the filtration of bacteria or viruses is a requirement. Other possible uses may be the processing into materials for catching air-dust pollutants, other microbes etc.

The invention will now be illustrated by examples. These examples are not limiting the scope of the invention in any way. The invention includes also any other embodiments which are based on the same inventive concept

### Examples

A polypropylene nonwoven meltblown material with a weight per unit area of 25gsm (gram per square meter) was used. Such material is commercially available e.g. from Borealis, Linz, Austria.

The electrostatic charge was applied using Eltex R130 - Proven High-Performance Charging Bars (for supply voltages up to 60 kV), supplied by an ELTEX KNH35 / KNH65 Universal High-Voltage Generator.

The used charging bars had an effective length of 1.0m each, while the nonwoven meltblown material had a width of 260mm. Therefore 740mm of the effective length of the charging bars were covered by a plastic sheet and an active electrocharging width of 260mm was obtained for the charging of the nonwoven material. The distance between the charging bar and the nonwoven material was 2.0cm. Several trials were made - see Table 1.

The electrostatic charge was measured directly on single fabric's surface manually by a commercially available hand-meter. The values given in Table 1 are always an average of 5 single measurements. The charge was measured a.) directly after the charging zone before the winding process, and b.) in the unwinded state after winding and subsequently unwinding the non-woven fabric for manufacturing end products.

**Table 1:**

| Trial no. | No. of bars | Voltage [kV] per Bar | Current [mA] per Bar | Electrostatic charge [kV] before winding | Electrostatic charge [kV] after winding |
|---|---|---|---|---|---|
| 1 | 1 | 16 | 1.8 | 40 | 5.0 |
| 2 | 2 | 16 | 1.8 | 50 | 8.0 |
| 3 | 2 | 30 | 3.6 | 50 | 16.0 |

Good particle and bacteria filtration results were achieved with the products of all three trials.

## Claims

1. A method for the manufacture of an electrostatically charged nonwoven material, said method comprising:
a. Providing a nonwoven material,
*b.* Conveying the nonwoven material through an electrocharging zone, said electrocharging zone containing one or more charging devices,
c. Charging the nonwoven material in the electrocharging zone,
wherein the nonwoven material is a meltblown material and in the electrocharging zone a voltage of between 10 and 50kV is applied by each charging device.

2. A method according to claim 1, wherein the charging devices are charging bars.

3. A method according to claim 1, wherein the applied electric current at each charging device is between 4.0 and 20.0mA per 1m length of charging device, preferably between 6.0 and 16.0mA per 1m length of charging device.

4. A method according to claim 1, wherein the nonwoven material consists of one or two individual nonwoven layers.

5. A method according to claim 1, wherein the charged nonwoven material is afterwards laminated with air permeable cover layers on one or both outer sides.

6. A nonwoven material, consisting of one or more individual layers, **characterized in that** the material was wound up on a roll and contains an electrostatic charge of between 4kV and 20kV, measured in unwinded state.

7. A nonwoven material according to claim 6, which is a meltblown material.

8. A nonwoven material according to claim 6, wherein the meltblown material is a synthetic polymer material, in particular consisting of one or more of the group containing polypropylene, polyethylene terephthalate, polylactic acid, other polyesters, co-polymers of polypropylene and polyethylene, in particular PP-co-PE.

9. A nonwoven material according to claim 6, that shows a weight per unit area of between 5 and 50gsm, in particular between 10 and 30gsm.

10. A nonwoven material according to claim 6, wherein the fiber diameters are below 10µm, preferably between 2.5 and 7.0µm.

11. A nonwoven material, consisting of one or two individual layers, **characterized in that** the material is an intermediate product and contains an electrostatic charge of between 40kV and 70kV.

12. Use of a nonwoven material for the manufacture of a filtering device, **characterized in that** the nonwoven material is a material according to claim 6, this material is used as an intermediate layer in a sandwich construction and the outer layers of the sandwich construction are consisting of a different material.

13. Use according to claim 12, wherein the filtering device is a personal protection device, in particular a medical mask, a respiratory mask or a garment.
